Europäisches Patentamt

(19) European Patent Office

Office européen des brevets

(11) Numéro de publication: **0 005 107**
**B1**

(12) **FASCICULE DE BREVET EUROPEEN**

(45) Date de publication du fascicule du brevet: **06.07.83**

(21) Numéro de dépôt: **79400239.4**

(22) Date de dépôt: **12.04.79**

(51) Int. Cl.³: **H 02 J 11/00, G 05 F 1/44**

(54) **Installation et procédé d'extraction de l'énergie d'une source capacitive avec régulation par commutation shunt.**

(30) Priorité: **13.04.78 CA 301068**

(43) Date de publication de la demande:
**31.10.79 Bulletin 79/22**

(45) Mention de la délivrance du brevet:
**06.07.83 Bulletin 83/27**

(84) Etats contractants désignés:
**DE FR GB IT SE**

(56) Documents cités:
**DE - A - 2 033 679**
**FR - A - 545 259**
**FR - A - 1 548 973**
**FR - A - 2 019 207**
**FR - A - 2 020 069**
**GB - A - 893 046**
**US - A - 1 816 717**
**US - A - 3 259 762**
**US - A - 3 882 373**
**US - A - 3 914 685**

Le dossier contient des informations techniques présentées postérieurement au dépôt de la demande et ne figurant pas dans le présent fascicule.

(73) Titulaire: **HYDRO-QUEBEC**
**75, Boulevard Dorchester Ouest**
**Montréal Québec H2Z 1A4 (CA)**

(72) Inventeur: **Berthiaume, Raymond**
**127, rue de Poitiers**
**Ste Julie Varennes Québec JOL 2CO (CA)**
Inventeur: **Blais, René**
**739, rue Père Le Jeune**
**Boucherville Québec (CA)**
Inventeur: **Dery, Marcel**
**2454 Frontenac**
**Varennes Québec JOL 2PO (CA)**

(74) Mandataire: **Rodhain, Claude**
**30, rue La Boétie**
**F-75008 Paris (FR)**

(56) Documents cités:
**POLYTECHNISCH TIJDSCHRIFT, volume 19 E, 16 septembre 1964, 's-GRAVENHAGE (NL) J. A. TACX: "Elektrostatische inductie als voedingsbron", pages 657e à 659e**
**ELEKTROTECHNIK, volume 7, juin 1953, No. 6, BERLIN (DE) W. J. GESSEN et autres: "Transformator für kapazitive Leistungs- entnahme aus Hochspannungsleitungen", pages 255 à 259**

Courier Press, Leamington Spa, England.

## Installation et procédé d'extraction de l'énergie d'une source capacitive avec régulation par commutation shunt

La présente invention concerne un procédé et une installation d'extraction de l'énergie électrique présente dans une source capacitive et est plus particulièrement relative à un procédé et une installation d'extraction de l'énergie électrique présente dans le fil de garde des lignes de transport à tension alternative.

La présence d'énergie électrique dans le fil de garde des lignes de transmission à haute tension alternative est connue depuis plusieurs années déjà. L'extraction de cette énergie, sourtout en des lieux éloignés, comporte de nombreux avantages, mais jusqu'ici des problèmes technologiques, comme la saturation des transformateurs utilisés ne permettaient pas une utilisation fiable et économique de cette énergie.

Un article publié par J. A. Talsc dans la revue Polytechnisch Tijdschrift, volume 19E, 16 Septembre 1964, pages 657 à 659 et dont la teneur correspond à ce qui est décrit et revendiqué dans le brevet US—A—3 259 762 au nom de Skuderne, décrit une installation d'extraction de l'énergie induite par couplage capacitif dans un fil de garde par les faisceaux conducteurs d'une ligne de transport d'énergie alternative. Cette installation a une sortie et comprend un dispositif abaisseur de tension transformant l'énergie induite dans le fil de garde en tension de sortie alternative, ainsi que des moyens pour réguler cette tension de sortie.

Le principal désavantage de ce type d'installation réside dans la façon dont l'énergie capacitaire extraite est régulée. En effet, le circuit résonnant utilisé est extrêmement hasardeux pour le transformateur et nécessite d'ailleurs la présence d'une charge fictive qui réduit de façon substantielle l'efficacité du système.

Le brevet FR—A—545 259 décrit une installation d'extraction de l'énergie induite par couplage capacitif dans un fil de garde par les faisceaux conducteurs d'une ligne de transport d'énergie alternative. Cette installation a une sortie et comprend un dispositif abaisseur de tension transformant l'énergie induite dans le fil de garde dans une tension de sortie. Cette installation ne comprend toutefois aucun système de régulation de la tension sinon des éclateurs montés en dérivation entre les branches de la sortie pour protéger le transformateur. Il en résulte donc que l'installation décrite dans ce brevet est absolument inutilisable en pratique puisqu'elle ne comporte aucun moyen pour réguler la tension, ce qui conduit à une saturation du transformateur que rien ne vient corriger, et ce, particulièrement lorsque le transformateur est "à vide".

Le brevet US—A—3 882 373 décrit un dispositif de contrôle pour un circuit de mesure de la tension dans une ligne de transport d'énergie. Ce dispositif est conçu pour rendre la charge du transformateur de mesure constante. Pour ce faire, le dispositif comprend un circuit de commutation pour éviter la saturation du transformateur. En aucun cas, ce circuit ne peut fonctionner à haute puissance. En aucun cas non plus ce circuit n'est prévu ni adaptable à une alimentation par couplage capacitif.

Le brevet US—A—1 816 717 décrit une installation d'extraction d'énergie résistive dans une ligne de transport équipée de moyens de régulation de type traditionnel. En aucun cas, les moyens de régulation décrits dans ce brevet ne pourraient être utilisés pour l'extraction d'énergie induite par couplage capacitif car il y aurait immédiatement saturation du transformateur. Il apparait en effet qu'une telle saturation du transformateur. Il apparait en effet qu'une telle saturation serait favorisée par les moyens de régulation eux-mêmes, alors que c'est précisément ce que l'on cherche à éviter dans l'installation selon l'invention.

La demande de brevet DE—A—2 033 679 décrit un dispositif d'extraction utilisable avec une source résistive de courant. Ce brevet décrit des moyens de régulation montés en dérivation à la sortie d'un transformateur. Toutefois ces moyens ne pourraient en aucun cas être adaptés tels quels à une source capacitive. En effet, le transformateur risquerait alors d'être endommagé par les crêtes de courant le traversant lors de la commutation des thyristors. Ce risque justifie d'ailleurs l'utilisation d'impédances sur le circuit d'alimentation bien que le circuit soit utilisé pourtant avec une source résistive.

Le brevet US—A—3 914 685, décrit un circuit de régulation monté en dérivation. Ce circuit est uniquement conçu pour être utilisé avec une source résistive et ne peut en aucun cas être utilisé avec une source capacitive à moins de modifications importantes et non évidentes, incluant, en particulier, la suppression du shunt du transformateur et d'une capacité montée en série avec une inductance de lissage des crêtes des courantes d'appel entre un circuit de commutation et un dispositif abaisseur de tension.

Les brevets FR—A—201 207 et FR—A—2 020 069, décrivent chacun un circuit de régulation sensiblement identique à celui décrit dans le brevet US—A—3 914 685 précédemment mentionné. Comme ce dernier, ces brevets décrivent des circuits de régulation inutilisables avec une source capacitive, à moins de modifications substantielles incluant, en particulier, la suppression d'un shunt magnétique d'entrefers sur le transformateur.

Enfin, un article de W. J. Gessen publié dans la revue Elektrotechnik, Volume 7, Juin 1953, N° 6, P.255, décrit une installation d'extraction de l'énergie induite par couplage capacitif dans un fil de garde qui est sensiblement identique à l'installation décrite dans le brevet US—A—3 259 762 précédemment analysé. Les mêmes commentaires que précédemment peuvent donc s'appliquer à cet article qui ne donne aucune indication permettant à l'homme de métier de résoudre les problèmes rencontrés dans l'extraction d'énergie d'une source capacitive.

L'objet de la présente invention réside en une installation et une procédé qui permettent de harnacher la puissance disponible dans le fil de garde des lignes de transport d'énergie à haute tension alternative. Le harnachement de cette puissance offre de nombreux avantages et possède de nombreuses applications dont l'une est d'alimenter le réseau de communications micro-ondes habituellement installé le long des lignes de transport d'énergie s'étendant sur de longues distances. Présentement, ces postes de communication et de transmission des données sont alimentés à l'aide de groupes électrogènes, à cause de leur éloignement géographique, ce qui se traduit par de multiples désavantages en termes d'entretien, de fiabilité et de difficulté d'alimentation en carburant.

Comme il est connu dans l'état de la technique, le fil de garde est ce conducteur accroché à la pointe des pylônes supportant les faisceaux de conducteurs haute tension et qui sert normalement de para-foudre aux lignes haute tension. Ce fil est donc relié à la terre et n'est pas utilisé au transport de l'énergie électrique en soi. Toutefois, à cause de sa proximité des faisceaux de conducteurs, une certaine quantité d'énergie y est induite par couplage capacitif.

Le but de la présente invention vise l'extraction de cette énergie alternative induite par le couplage capacitif dans le fil de garde par les faisceaux de conducteurs des lignes de transport à haute tension alternative.

L'installation d'extraction selon la présente invention a une sortie et comprend un dispositif abaisseur de tension transformant l'énergie induite dans un fil de garde en une tension de sortie alternative. L'installation comprend également des moyens pour régulariser la tension de sortie alternative, lesquels sont montés en dérivation entre le dispositif abaisseur de tension et la sortie. Ces moyens pour réguler la tension comprennent un circuit de commutation relié au dispositif abaisseur de tension.

Selon l'invention, cette installation est caractérisé en ce que le circuit de commutation fonctionne dans l'une et l'autre des polarités possibles de la tension et en ce que les moyens de régulation comprennent en outre:

— une inductance reliée en série entre le circuit de commutation et le dispositif abaisseur de tension, de façon à pouvoir inverser la polarité de la tension et bloquer le circuit de commutation après sa mise à feu dans une polarité jusqu'à ce qu'il soit mis à feu dans l'autre polarité; et

— un circuit de contrôle suivant la polarité et l'amplitude de la tension de sortie alternative pour commander de façon sélective la mise à feu du circuit de commutation, ce circuit de contrôle comprenant des moyens asservis à la phase de la tension de sortie alternative et à polarité du circuit de commutation pour mettre à feu ce circuit de commutation successivement dans une polarité puis dans l'autre.

La présente invention concerne également un procédé d'extraction de l'énergie induite par couplage capacitif dans un fil de garde d'une ligne de transport d'énergie, due type comprenant:

— l'isolation d'une section de longueur prédéterminée du fil de garde;
— la transformation de ladite énergie induite dans le fil de garde en tension alternative de sortie à l'aide d'un transformateur abaisseur de tension; et
— la régulation de la tension alternative de sortie au moyen d'un circuit fonctionnant par commutation shunt au secondaire du transformateur abaisseur de courant.

Selon l'invention, le procédé d'extraction est caractérisé en ce que:

— on régle la tension alternative de sortie en détectant la polarité du circuit de commutation, en détectant la phase et l'amplitude de la tension de sortie et en commandant de façon sélective la mise à feu du circuit de commutation dans une polarité puis dans l'autre, suivant à chaque fois la phase et l'amplitude de la tension de sortie;
— l'on assure une symètrie des alternances positive et négative de la tension de sortie; et
— l'on ajuste la mise à feu du circuit de commutation à un angle maximum lorsque ladite tension de sortie dépasse une valeur nominal prédéterminée de capacité de fourniture de puissance par ledit fil de garde.

Un mode de réalisation préféré de la présente invention sera décrit ci-après avec référence aux dessins annexés dans lesquels:—

la fig. 1 illustre schématiquement l'installation d'extraction avec régulation par commutation shunt de l'énergie d'un fil de garde d'une ligne de transfert à haute tension C.A.;

Les figures 2a et 2e montrent des formes d'ondes de circuit de la fig. 1;

la fig. 3 est un bloc diagramme du montage illustré à la fig. 1;

la fig. 4 présente un schéma détaillé des composantes formant l'installation d'extraction et de régulation de la fig. 3;

la fig. 5 illustre un diagramme électrique détaillé du circuit hybride utilisé dans la fig. 4.

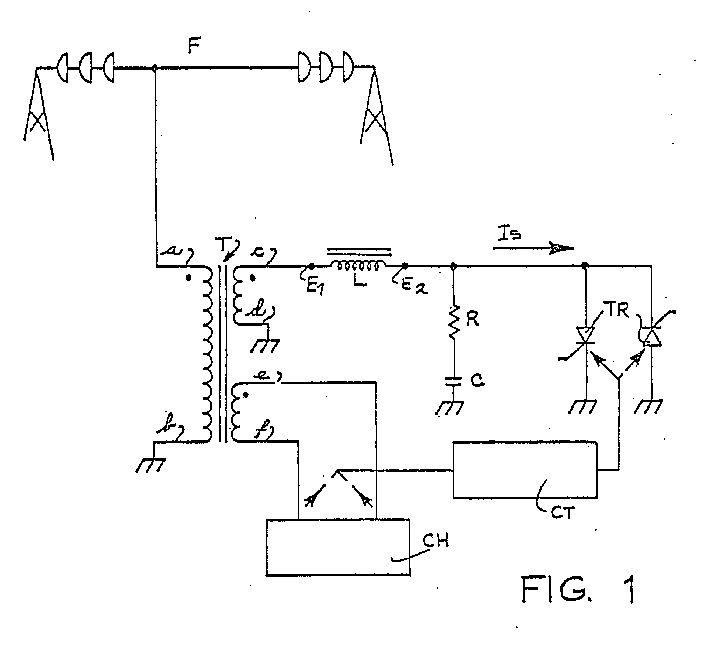

La fig. 1 montre de façon schématique l'agencement de l'installation d'extraction et de régulation de l'énergie induite dans le fil de garde F, isolé sur une longueur prédéterminée, par un faisceau de conducteurs électriques d'une ligne de transport à très haute tension alternative. Etant donné sa très haute impédance, une telle source d'alimentation par fil de garde ou source capacitive est semblable à une source de courant. Ce courant alimente les enroulements primaires d'un transformateur-abaisseur de tension T dont la borne "a" est reliée au fil de garde alors que la borne "b" est mise à la terre. Une charge d'utilisation CH est branchée à travers les enroulements secondaires basse tension e—f du transformateur T. Afin de réguler la puissance délivrée à la charge CH, un circuit de commutation est monté en dérivation sur le secondaire du transformateur, entre la sortie e—f et les enroulements secondaires moyenne tension c—d. La commutation shunt s'effectue à l'aide de thyristors de puissance TR montés tête-bêche dont la mise à feu respective est commandée par le circuit de contrôle CT relié à la sortie e—f du transformateur. Un circuit RC est monté en parallèle avec les thyristors TR afin d'amortir ou de filtrer les ondes transitoires générées au moment de la commutation de l'un ou l'autre des thyristors. Une inductance de lissage L est reliée en série entre les enroulements secondaires c—d et le circuit de commutation de puissance proprement dit afin de limiter les courants crêtes de commutation, à travers le secondaire du transformateur T.

Il est à noter que le dispositif de transformation de l'énergie de la source capacitive, tel le fil de garde peut être aussi bien un transformateur de type isolateur ou élévateur de tension que celui décrit plus haut, selon les cas d'application, sa fonction demeurant inchangée.

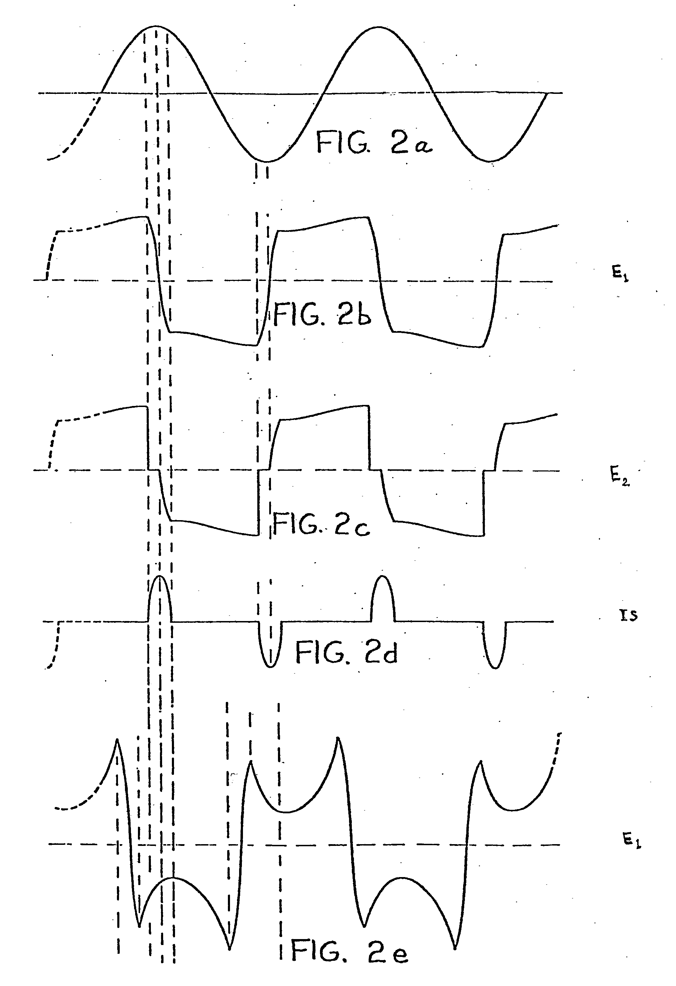

Les figures 2a à 2e montrent des formes d'ondes de tension et de courant utiles à expliquer le fonctionnement du système de la fig. 1.

La figure 2 représente la sinusoïde de tension apparaissant sur le fil de garde deus le fonctionnement sans charge et sans le branchement du régulateur de puissance; la figure 2b est la forme d'onde obtenue en $E_1$ lorsque le système fonctionne à pleine charge, alors que la figure 2c montre cell en $E_2$ pour une pleine charge également. La fig. 2d montre la forme du courant IS au moment de la commutation et dont le sens varie selon que l'un ou l'autre des thyristors TR est conducteur, et la fig. 2e représente la tension en $E_1$ lorsque le système opère sans charge. A pleine charge la mise à feu des thyristors TR se fait à la crête de la sinusoïde de la fig. 2a et un des thyristors entre en conduction pour créer aux bornes de l'inductance de lissage ·L une tension, et un courant IS y circule. On a alors l'équivalent d'un circuit L—C dont la valeur de C est celle de la capacité réfléchie par le fil de garde, ce qui crée la forme d'onde du courant IS de la fig. 2d. On sait que dans une inductance, le courant est toujours déphasé de 90° par rapport à la tension de sorte que $E_1$ et $E_2$ (fig. 2b et 2c respectivement) passent par un point de tension nulle lorsque le courant IS est maximum. Par la suite, la tension aux bornes de l'inductance L s'inverse et le courant IS retourne vers une valeur nulle; un des thyristors TR se bloque et la tension $E_1$ possède une amplitude égale, moins les pertes, mais de polarité inverse, poi reppert à celle précédant la mise à feu du thyristor. A ce moment l'énergie capacitive du fil de garde compense les pertes préalablement encourues en plus de fournir la puissance requise par la charge. La tension en $E_1$ et $E_2$ possède alors une forme d'onde semblable à une portion du sinusoïde, coïncidant dans le temps avec celle de la fig. 2a, et ceci jusqu'à la prochaine mise à feu des thyristors TR. Cette mise à feu a lieu à la crête de l'alternance suivante de la tension de la fig. 2a pour produire une forme d'onde semblable à celle de l'alternance précédente, mais de polarité inverse. Il est à noter que cette régulation permet d'obtenir une forme d'onde à alternance symétrique.

L'agencement de ce régulateur permet non seulement d'assurer la symétrie de la forme d'onde de la tension de sortie, mais également de compenser toute variation dans la charge de sortie. En effet, lorsque la charge de sortie diminue, la compensation donnée par la source capacitive, le fil de garde, devra également décroîte afin de garder constante la valeur efficace de la tension de sortie. Pour ce faire, la mise à feu des thyristors est devancée dans le temps, ce qui est apparent lorsque l'on compare les formes d'onde des fig. 2b et 2e par rapport à celle de la fig. 2a. Car, étant donné une source capacitive, le couplage d'énergie à la charge est toujours proportionnel à la dérivé première de la tension, DV/DT, de la source en tenant compte évidemment de la polarité de cette dernière. Ainsi, lorsque la mise à feu de l'un ou l'autre des thyristors s'effectue au début de l'alternance, la puissance disponible à la charge devient moins grande en raison du changement de polarité de DV/DT à la crête de la forme d'onde sinusoïdale. On remarque également que l'amplitude de la tension en $E_1$ dans le fonctionnement sans charge (fig. 2e) présente des écarts plus grands, ce qui atténue de façon moindre l'énergie de la source capacitive.

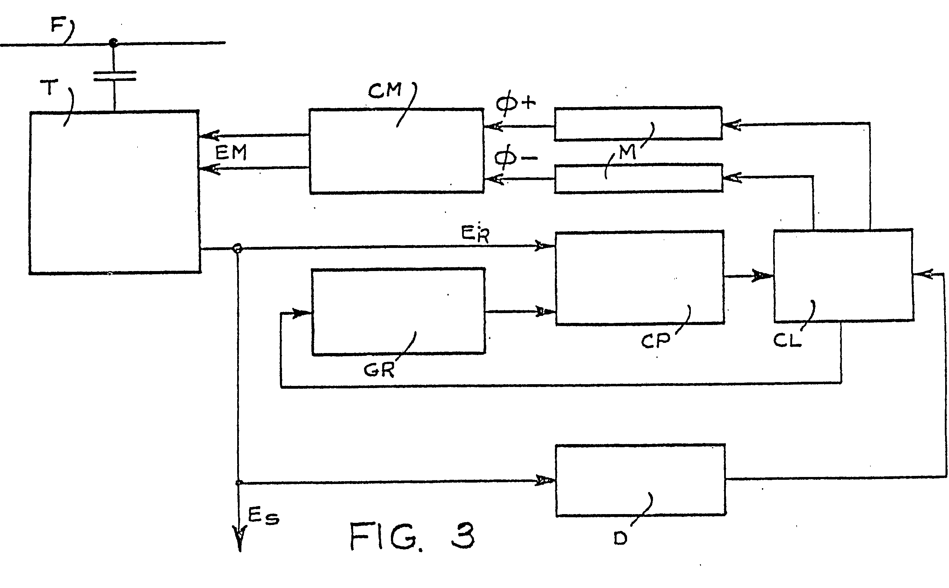

La fig. 3 illustre sous forme d'un bloc diagramme les principaux circuits formant le système de régulation par commutation shunt. Le transformateur abaisseur de tension T dont le primaire est relié au fil de garde F fournit une tension de sortie ES à travers un des enroulements secondaires alors qu'une tension EM apparait à travers les bornes d'un autre enroulement secondaire, ce dernier étant celui par lequel la régulation de la puissance de sortie est effectuée. Ce système de régulation, monté en dérivation sur le secondaire du transformateur, comporte un comparateur CP, alimenté par un signal de consigne ER et par un générateur de rampe GR, qui délivre un signal au circuit de contrôle logique CL pour commander les circuits de mise à feu M des thyristors des circuits de puissance CM. Ce comparateur CP détermine le moment de mise à feu des thyristors en fonction de la valeur de la rampe générée par le circuit GR, qui est asservi en phase avec la source capacitive F, et en fonction de la tension de sortie ES due système. Le circuit de contrôle CL détermine, lorsque le comparateur CP lui en donne l'ordre et selon la phase, et suivant l'information fournie par le détecteur de polarité D, lequel des circuits de mise à feu M sera amorcé. Ces circuits de mise à feu M servent en effet de liens entre les circuits basse tension et faible puissance, et les thyristors utilisés dans le circuit de commutation CM, lesquels travaillent à haute tension et fort courant.

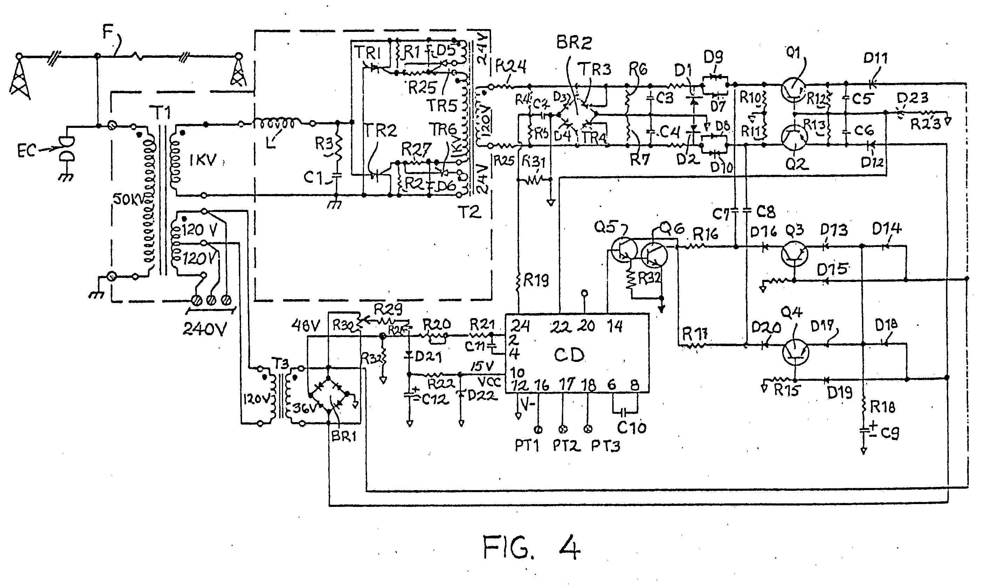

La Fig. 4 donne un schéma détaillé du système d'extraction avec régulation par commutation shunt de la fig. 3. L'énergie du fil de garde F est couplée à travers le transformateur abaisseur de tension $T_1$ à la charge d'utilisation reliée à l'enroulement secondaire de 240 alternatifs qui comporte une prise médiane, et aux circuits de commutation de puissance proprement dits par l'enroulement secondaire de 1 kV alternatifs.

De la prise médiane de l'enroulement secondaire de 240 alternatifs on alimente en tension continue le système de régulation proprement dit à travers le transformateur-abaisseur de tension $T_3$, le pont de diodes $BR_1$, la diode $D_{21}$, le condensateur $C_{12}$, la résistance $R_{22}$ et la diode Zener $D_{22}$, d'une part, et on fournit au circuit comparateur une information relative à l'amplitude et à la phase de la source capacitive F. Cette information est prise au niveau du rhéostat $R_{30}$ branché en dérivation sur le secondaire du transformateur $T_3$ et des résistances $R_{28}$, $R_{29}$ et $R_{32}$ au traverse les résistances $R_{20}$ et $R_{21}$ ainsi que du condensateur $C_{11}$. Le rhéostat $R_{30}$ équilibre les niveaux de tension produits par les alternances positive et négative, ceci afin de corriger toute erreur d'asymétrie du système. Le potentiomètre $R_{20}$ ajuste le niveau du signal d'entrée de l'intégrateur formé par les résistances $R_{20}$ et $R_{21}$ et le condensateur $C_{11}$, de sorte à fixer la sortie alimentant la charge extérieure au niveau désiré de 240 V alternatifs.

Au moment où la rampe générée par le circuit intégrateur attient le niveau préetablis, le circuit hybride CD génère une impulsion de mise à feu à travers la sortie 22. Cette impulsion est acheminée vers la gâchette du thyristor $TR_3$ ou $TR_4$ par le transistor $Q_1$ ou $Q_2$. La mise en conduction du transistor $Q_1$ et $Q_2$ est déterminée par la polarité du signal alimentant les diodes $D_{11}$ et $D_{12}$ reliées au transformateur $T_3$.

En outre, les diodes $D_9$ et $D_{10}$ ainsi que les condensateurs $C_3$ et $C_4$ assurent une immunité au bruit en vue d'éviter une mise à feu erronée des thyristors $TR_3$ et $TR_4$. La mise en conduction de l'une ou l'autre des thyristors $TR_3$ et $TR_4$ du pont de diodes $BR_2$ équivaut à la mise en court-circuit de l'enroulement 120 alternatifs du transformateur $T_2$ en travers des diodes $D_3$ et $D_4$ et des résistances limitatrices de courant $R_{24}$ ou $R_{25}$ selon le cas. Ce court-circuit est alors réfléchi aux autres enroulements du transformateur $T_2$ et permet le déclenchement des thyristors de puissance $TR_1$ ou $TR_2$ via les thyristors $TR_5$ ou $TR_6$, respectivement, suivant l'information de polarité fournie par le transformateur $T_3$ et les diodes $D_{11}$ et $D_{12}$. Le thyristor $TR_1$ ou $TR_2$ étant conducteur, un courant, dont les transitoires sont filtrées par le condensateur $C_1$ et la résistance $R_3$ circule à travers la bobine L et l'enroulement de 1 kV alternatifs, comme indiqué dans la description de la fig. 1. La mise en court circuit du transformateur $T_2$ génère également un signal de rappel vers vers l'intégrateur formé des résistances $R_{20}$ et $R_{21}$ et du condensateur $C_{11}$ par l'intermédiaire de la résistance $R_{19}$ et du circuit CD.

En outre, un circuit auxiliaire est prévu afin d'empêcher une perte de synchronisation du système, ce qui pourrait avoir lieu lors du démarrage ou lorsque la charge extérieure excède la capacité nominale du régulateur. Ce circuit est formé principalement des transistors $Q_3$, $Q_4$, $Q_5$ et $Q_6$, ainsi que des condensateurs $C_7$, $C_8$ et $C_9$. Dans le cas d'une alternance positive aux diodes $D_{18}$ et $D_{19}$, le condensateur $C_9$ se charge par la résistance $R_{18}$ mais le transistor $Q_4$ est bloqué, son émetteur étant plus négatif que sa base. Toutefois, au début de la décroissance de cette alternance positive, le transistor $Q_4$ entre en conduction et une impulsion positive passe au thyristor $TR_4$ à travers le condensateur $C_8$, ce qui provoque la mise à feu de l'un des thyristors de puissance $TR_1$ ou $TR_2$ à un angle correspondant à la puissance maximale de l'installation. Le même processus se produit dans l'autre alternance, à travers le transistor $Q_3$ et le condensateur $C_7$. Les transistors $Q_5$ et $Q_6$ permettent pour leur part le recharge des condensateurs $C_7$ et $C_8$ après un temps de rappel fixé par le condensateur $C_{10}$ relié aux bornes 6 et 8 du circuit hybride CD.

Par ailleurs, afin d'assurer la fonction de protection dévolue au fil de garde, relativement à la ligne de transport d'énergie, il est prévu de relier en dérivation avec le primaire du transformateur $T_1$ un éclateur EC de type tige à l'air libre de 100 kV crête. De plus, une protection du régulateur contre toute impulsion du fil de garde, dûe soit à la foudre, soit à une surtension, est assurée par le circuit formé de la diode Zener $D_{23}$ et de la résistance $R_{23}$. Dans ce dernier cas, la surtension se communique au transformateur $T_3$ et aux diodes $D_{11}$ et $D_{12}$ pour amorcer la diode Zener $D_{23}$, ce qui a pour résultat de mettre en conduction les transistors $Q_1$ ou $Q_2$ et, par la suite, l'une des thyristors de puissance $TR_1$ ou $TR_2$.

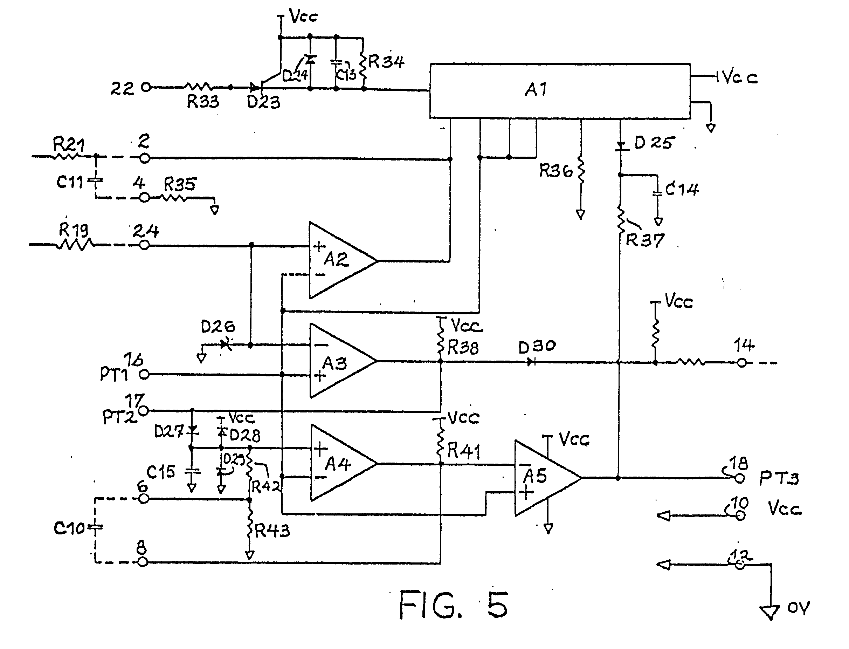

La fig. 5 illustre une forme de réalisation du circuit hybride CD de la fig. 4. Ce circuit hybride est composé principalement d'un circuit de contrôle $A_1$, de forme intégrée, du type CA723H fabriqué par RCA par exemple, qui commande la génération d'un signal de mise à feu à travers la borne 22 par l'intermédiaire du thyristor $D_{23}$ et des composantes associées, soit les résistances $R_{33}$ et $R_{34}$, la diode $D_{24}$ et le condensateur $C_{13}$. Ce signal de mise à feu est émis par le circuit de contrôle $A_1$ lorsque la rampe générée par l'intégrateur formé par la résistance $R_{21}$ et le condensateur $C_{11}$ à travers les bornes 2 et 4 atteint une valeur prédéterminée, cette rampe étant asservie en phase à la sortie du transformateur $T_1$ (fig. 4). Un signal de rappel arrivant de la résistance $R_{19}$ par la borne 24 agit sur l'intégrateur relié aux bornes 2 et 4 par l'intermédiaire du différentiateur $A_2$ au moment de la mise à feu des thyristors $TR_3$ ou $TR_4$ (fig. 4). Le signal de rappel provenant de la borne 24 alimente également le différentiateur $A_3$ relié à une diode Zener $D_{26}$. D'autre part, un signal de recharge des condensateurs $C_7$ et $C_8$ (fig. 4) est émis par le circuit de commande $A_1$ à travers la diode $D_{25}$, le condensateur $C_{14}$ et les résistances $R_{37}$, $R_{39}$ et $R_{40}$, par la borne 14 du circuit hybride et suivant un temps de rappel déterminé par le condensateur $C_{10}$ branché aux bornes 6 et 8, des résistances $R_{42}$ et $R_{43}$ à travers la différentiateur $A_5$ et la résistance $R_{40}$. Des points d'essai et de vérification $PT_1$, $PT_2$ et $PT_3$ sont prévus pour vérifier le bon fonctionnement du système. Ces points de vérification sont reliés au circuit de contrôle $A_1$ ainsi qu'aux bornes de sortie des signaux de mise à feu et de rappel, à travers les différentiateurs $A_2$, $A_3$, $A_4$ et $A_5$, de sorte à pouvoir examiner à volonté le fonctionnement adéquat de l'installation de régulation et de commutation de puissance en général.

L'installation d'extraction avec régulation d'extraction par commutation shunt décrite plus haut a été mise à l'essai sur une ligne de transport d'énergie de 735 kV alternatifs. Un segment de 4 km du fil de garde associé à cette ligne a été isolé. La puissance de sortie de la présente installation a alors été de 20 kW, soit 5 kW par kilomètre de fil de garde isolé, ce qui est en soi, un résultat des plus remarquables. De plus, grâce à cette installation, la variation de la tension de sortie, entre les cas extrêmes d'opération à pleine charge et sans charge s'est avérée minime, soit moins$\pm 2\%$ dans tous les cas.

## Revendications

1. Installation d'extraction de l'énergie induite par couplage capacitif dans un fil de garde (F) par les faisceaux conducteurs d'une ligne de transport d'énergie alternative ladite installation ayant une sortie et comprenant un dispositif abaisseur de tension (T, $T_1$) transformant ladite énergie induite dans le dit fil de garde (F) en une tension de sortie, et des moyens pour réguler ladite tension de sortie alternative, lesdits moyens de régulation étant montés en dérivation entre ledit dispositif abaisseur de tension (T, $T_1$) et ladite sortie et comprenant un circuit de commutation (TR, CM) relié au dispositif abaisseur de tension (T, $T_1$), caractérisée en ce que ledit circuit de commutation (TR, CM) fonctionne dans l'une et l'autre des polarités possibles de la tension et en ce que lesdits moyens de régularisation comprennent en outre:

— une inductance (L) reliée en série entre le circuit de commutation (TR, CM) et le dispositif abaisseur de tension (T, $T_1$) de façon à pouvoir inverser la polarité de la tension et bloquer le circuit de commutation (TR, CM) après sa mise à feu dans une polarité jusqu'à ce qu'il soit mis à feu dans l'autre polarité; et,

— un circuit de contrôle (CD, CL) suivant la polarité et l'amplitude de la tension de sortie alternative pour commander de façon sélective la mise à feu du circuit de commutation (TR, CM), ledit circuit de contrôle (CD, CL) comprenant des moyens asservis à la phase de la tension de sortie alternative et à la polarité du circuit de commutation (TR, CM) pour mettre à feu ledit circuit de commutation (TR, CM) successivement dans une polarité puis dans l'autre.

2. Installation selon la revendication 1, caractérisé en ce qu'elle comprend en outre:

— un détecteur de polarité (D) relié entre la sortie et le circuit de contrôle (CD, CL), ledit détecteur générant un signal de polarité pour ledit circuit de contrôle (CD, CL).

— un ensemble ($R_{30}$-$R_{28}$-$R_{29}$-$R_{32}$) de détection de la phase et de l'amplitude de la tension de sortie générant un signal de consigne pour ledit circuit de contrôle (CD, CL);

— ledit circuit de contrôle (CD, CL) ne commandant la mise à feu du circuit de commutation (TR, CM) que lorsque le signal de consigne a une valeur prédéterminée et le signal de polarité indique une polarité prédéterminée.

3. Installation selon la revendication 2, caractérisée en ce que l'ensemble de détection de la phase et de l'amplitude de la tension de sortie comprend des moyens (GR; $R_{20}$-$R_{21}$-$C_{11}$) de génération d'une rampe asservie à la phase de la tension de sortie et un comparateur (CP, CD) monté en série entre les moyens de génération de la rampe (GR; $R_{20}$-$R_{21}$-$C_{11}$) et le circuit de contrôle (CD, CI) ledit comparateur (CP, CD) définissant le moment de la mise à feu du circuit de commutation (TR, CM) en fonction de la valeur de la rampe générée.

4. Installation selon la revendication 3, caractérisée en ce que le circuit de contrôle (CD, CL) comprend un circuit ($T_2$, $R_{19}$, CD) d'émission d'un signal de rappel des moyens de génération de la rampe.

5. Installation selon la revendication 3 ou 4, caractérisée en ce qu'elle comprend un ensemble ($R_{30}$) assurant une symétrie des alternances positive et négative de ladite tension de sortie alternative, ledit ensemble ($R_{30}$) étant relié entre ladite sortie de l'installation et lesdits moyens de génération de la rampe (GR; $R_{20}$-$R_{21}$-$C_{11}$).

6. Installation selon l'une quelconque des revendications 1 à 5, caractérisée en qu'elle comprend un circuit auxiliaire

$$(Q_3\text{-}Q_4\text{-}Q_5\text{-}Q_6\text{-}Q_7\text{-}Q_8\text{-}Q_9)$$

de enchant la mise à feu dudit circuit de commutation à un angle limite lorsque la puissance demandée par ladite sortie dépasse la capacité nominale de ladite installation.

7. Installation selon l'une quelconque des revendications 1 à 6 caractérisée en ce que le circuit de commutation (TR, CM) est constitué par deux éléments commutateurs montés tête-bêche.

8. Installation selon l'une quelconque des revendications 1 à 7, caractérisée en ce que ledit dispositif abaisseur de tension (T, $T_1$) comprend un transformateur ayant un enroulement primaire relié audit fil de garde et deux enroulements secondaires, ladite tension de sortie étant générée à travers l'un des enroulements secondaires, lesdits moyens de régulation étant montés entre l'autre desdits enroulements secondaires et ladite sortie.

9. Procédé d'extraction de l'énergie induite par couplage capacitif dans un fil de garde (F) d'une ligne de transport d'énergie, due type comprenant:

— l'isolation d'une section de longueur prédéterminée dudit fil de garde (F);
— la transformation de ladite énergie induite dans le fil de garde en tension alternative de sortie, à l'aide d'un transformateur abaisseur de tension (T, $T_1$); et
— la régulation de ladite tension alternative de sortie au moyen d'un circuit fonctionnant par commutation shunt (TR, CM) au secondaire dudit transformateur abaisseur de tension,

caractérisé en ce que,

— l'on régle la tension alternative de sortie en détectant la polarité du circuit de commutation, en détectant la phase et l'amplitude de la tension de sortie, et en commandant de façon sélective, la mise à feu du circuit de commutation (TR, CM) dans une polarité, puis dans l'autre, suivant à chaque fois la phase et l'amplitude de ladite tension de sortie;
— l'on assure une symétrie des alternances positive et négative de ladite tension de sortie; et
— l'on ajuste la mise à feu du circuit de commutation (TR, CM) à un angle maximum lorsque ladite tension de sortie dépasse la valeur nominale de capacité de fourniture de puissance par ledit fil de garde (F).

**Patentansprüche**

1. Anlage zur Gewinnung von durch induktive Koppelung in einem Schutzleiter aus den Leiterbündeln einer Wechselstrom Fernleitung induzierter elektrischer Energie, welche Anlage nach einer Herausführung eine spannungserniedrigende Vorrichtung (T, $T_1$) zum Transformieren der im Schutzleiter (F) induzierten Spannung in eine Wechselstrom-Ausgangsspannung, ferner eine Einrichtung zum Einregeln dieser Ausgangsspannung aufweist, wobei diese Regeleinrichtung im Nebenschluß zwischen der spannungserniedrigenden Vorrichtung und dem Ausgang geschaltet ist und auch einen Schaltkreis (Wendekreis TR, CM) aufweist, der mit der spannungserniedrigenden Vorrichtung (T, $T_1$) verbunden ist, dadurch gekennzeichnet, daß der Schaltkreis (TR, CM) sowohl in der einen als auch in der anderen der möglichen Spannungs-Polaritäten wirkend gestaltet ist und daß die Regeleinrichtung u.a. beinhaltet;

— eine in Serie zwischen dem Schaltkreis (TR, CM) und der spannungserniedrigenden Vorrichtung (T, $T_1$) in der Art geschaltete Induktanz (L), daß die Spannungs-Polarität gewendet wird und daß nach dem Zünden in einer Polarität der Wendekreis (TR, CM) gesperrt ist bis zur Zündung in der anderen Polarität; ferner
— einen der Polarität und der Amplitude der Ausgangs-Spannung folgenden Steuerkreis (CT, CL) zum selektiven Steuern des Zündens des Schaltkreises (TR, CM), welcher Steuerkreis (CT, CL) eine von der Phase der Spannung am Ausgang und von der Polarität des Schaltkreises (TR, CM) gesteuerte Einrichtung zum aufeinanderfolgenden Zünden des Schaltkreises (TR, CM) in der einem und dann in der anderen Polarität aufweist.

2. Anlage nach Anspruch 1, dadurch gekennzeichnet, daß u.a. die folgenden weiteren Anlageteile vorhanden sind:

— einen zwischen den Ausgang und den Steuerkreis (CT, DL) geschalteten Polaritätsdetektor (D) zum Liefern eines Polaritätssignales an den Steuerkreis (CT, CL),
— einen Schaltkreis ($R_{30}$-$R_{28}$-$R_{29}$-$R_{32}$) zum Ermitteln von Phase und Amplitude der Aus-

gangs-Spannung und Erzeugen eines Befehlssignals für den Steuerkreis (CT, CL) mit der Maßgabe, daß

— der Steuerkreis (CT, CL) ein Zünden des Wendekreises (TR, CM) erst dann steuert, wenn das Befehlssignal einen vorbestimmten Wert hat und wenn das Polaritätssignal eine vorbestimmte Polarität anzeigt.

3. Anlage nach Anspruch 2, dadurch gekennzeichnet, daß der Schaltkreis zum Ermitteln von Phase und Amplitude der Ausgangsspannung einen Rampen-Generator-Kreis (GR; $R_{20}$-$R_{21}$-$C_{11}$) beinhaltet, der in Abstimmung mit der Ausgangs-Phase arbeitet, daß auch ein Komparator (CP, CD) in Serie zwischen den Rampen-Generator-Kreis (GR; $R_{20}$-$R_{21}$-$C_{11}$) und den Steuerkreis (CT, CL) geschaltet ist und daß durch den Komparator (CP, CD) der Zeitpunkt des Zündens des Schaltkreises (TR, CM) in Abhängigkeit vom Wert der Rampe bestimmt ist.

4. Anlage nach Anspruch 3, dadurch gekennzeichnet, daß der Steuerkreis (CT, CL) einen weiteren Kreis ($T_2$, $R_{19}$, CD) beinhaltet, der ein den Rampen-Generator-Kreis zurückstellenndes Signal liefert.

5. Anlage nach einem der Ansprüche 3 oder 4, dadurch gekennzeichnet, daß ein weiterer Kreis ($R_{30}$) zum Sicherstellen der Symmetrie der positiven und negativen Zyklen der Ausgangsspannung eingeschlossen ist und daß dieser Kreis ($R_{30}$) zwischen dem Ausgang aus der Anlage und dem Rampen-Generator-Kreis (GR; $R_{20}$-$R_{21}$-$C_{11}$) angeschlossen ist.

6. Anlage nach einem der vorherigen Ansprüche 1 bis 5, dadurch gekennzeichnet, daß auch ein Hilfskreis ($Q_3$, $Q_4$, $Q_5$, $Q_6$, $Q_7$, $Q_8$, $Q_9$) vorgesehen ist, der zum Auslösen des Zündimpulses zum Schaltkreis bei einem maximalen Winkel dient, sobald die am Wechselstrom-Spannungs-Ausgang abgenommene Leistung die Nennkapazität des Systems übersteigt.

7. Anlage nach einem der vorherigen Ansprüche 1 bis 6, dadurch gekennzeichnet, daß der Schaltkreis (TR, CM) aus zwei in Kopf-/Fußpunkt-Koppelung geschalteten Schaltelementen gebildet ist.

8. Anlage nach einem der vorherigen Ansprüche 1 bis 7, dadurch gekennzeichnet,

— daß die spannungserniedrigende Vorrichtung (T, $T_1$) einen Transformator mit einer mit dem Schutzleiter der Freileitung verbundenen Primärwicklung und mit zwei Sekundärwicklungen aufweist,
— daß die Ausgangsspannung in einer der Sekundärwicklungen erzeugt wird und
— daß die Steuer/Regeleinrichtung zwischen der zweiten Sekundärwichlung und dem Ausgang geschaltet ist.

9. Verfahren zur Gewinnung von durch induktive Koppelung in einem Schutzleiter aus den Leiterbündeln einer Wechselstrom-Ferleitung induzierter elektrischer Energie, mit den Merkmalen:

— Isolieren eines bestimmten Längs-Abschnittes des Schutzleiters (F),
— Transformieren der im Schutzleiter induzierten Energie mittels eines spannungs-absenkenden Transformators (T, $T_1$) in eine Ausgangs-Wechselspannung und
— Einregeln der Ausgangs-Wechselspannung mittels einem zur Sekundärwicklung des Transformators im Nebenschluß liegenden Schaltkreis (Wendekreis TR, CM) sowie

mit den kennzeichnenden Schritten:

— Regeln der Ausgangs-Wechselspannung durch Feststellen der Polarität des Schaltkreises (TR, CM) unter Ermitteln von Phase und Amplitude der Ausgangs-Spannung sowie unter selektivem Steuern des Zündens des Schaltkreises (TR, CM) in die eine und die andere Polarität unter jedesmaligem Folgen der Phase und Amplitude der Ausgangsspannung,
— Sicherstellen der Symmetrie der positiven und negativen Halb-perioden den Aus-

gangs-Spannung und

— Einregeln des Zündens des Schaltkreises (TR, CM) auf einen maximalen Winkel, wenn die Ausgangs-Spannung einen bestimmten Nennwert der Lieferkapazität an Leistung aus dem Schutzleiter (F) übersteigt.

**Claims**

1. A system for extracting the energy induced by a capacitive coupling in a guard wire (F) by the conductors of an AC transmission line, said system having an output and comprising a voltage step-down device (T, $T_1$) for transforming said energy induced in the guard wire (F) into an output AC voltage, and regulation means for regulating said output AC voltage, said regulation means being mounted in shunt between said voltage step-down device (T, $T_1$) and said output and comprising a switching circuit (TR, CM) coupled to the voltage step-down device (T, $T_1$), characterized in that said switching circuit (TR, CM) operates in one and the other possible voltage polarities and said regulation means further comprises:

— an inductance (L) serially mounted between the switching circuit (TR, CM) and the voltage step-down device (T, $T_1$) for reversing the voltage polarity and blocking the switching circuit (TR, CM) after it has been fired in one polarity until it is fired in the other polarity, and
— a control circuit (CT, CL) responsive to the polarity and amplitude of the output AC voltage for selectively controlling the firing of the switching circuit (TR, CM), said control circuit (CT, CL) comprising means responsive to the phase of the output AC voltage and the polarity of the switching circuit (TR, CM) for firing said circuit alternatively in one polarity and in the other.

2. A system as claimed in claim 1, characterized in that is further comprises:

— a voltage polarity detector (D) connected between the system output and the control circuit for delivering a polarity signal to the said control circuit (CT, CL) and
— means ($R_{30}$-$R_{28}$-$R_{29}$-$R_{32}$) for detecting the phase and the amplitude of the output AC voltage and for delivering a reference signal to said control circuit, said control circuit (CT, CL) firing the switching circuit (TR, CM) only when the reference signal is of a predetermined value and the polarity signal from the polarity detector is of a predetermined polarity.

3. A system as claimed in claim 2; characterized in that said means for detecting the phase and amplitude of the output AC voltage includes ramp generating means (GR; $R_{20}$-$R_{21}$-$C_{11}$) operative in accordance with the phase of said output AC voltage and a comparator (CP, CD) serially mounted between the ramp generating means (GR; $R_{20}$-$R_{21}$-$C_{11}$) and the control circuit said comparator (CP, CD) defining the instant of firing of the switching circuit (TR, CM) in function of the value of the ramp generated.

4. A system as claimed in Claim 3, characterized in that said control circuit comprises a circuit ($T_2$, $R_{19}$, CD) delivering a signal for resetting said ramp generating means.

5. A system as claimed in claim 3 or 4 characterized in that it comprises means ($R_{30}$) for ensuring symmetry of the positive and negative cycles of said output AC voltage, said means ($R_{30}$) for ensuring symmetry being coupled between the system output and the ramp generating means (GR; $R_{20}$, $R_{21}$, $C_{11}$).

6. A system as claimed in any proceeding claims 1 to 5 characterized in that it comprises an auxiliary circuit ($Q_3$, $Q_4$, $Q_5$, $Q_6$, $Q_7$, $Q_8$, $Q_9$) for actuating firing of said switching circuit at a maximum angle when the power required by the output AC voltage exceeds a nominal capacity of said system.

7. A system as claimed in any proceeding claims 1 to 6, characterized in that the switching circuit (TR, CM) consists of two switching elements coupled top to bottom.

8. A system as claimed in any proceeding claims 1 to 7, characterized in that said voltage step-down device (T, $T_1$) comprises a transformer having a primary winding connected to said guard wire and two secondary windings, said output AC voltage being delivered through one of the secondary windings and said regulation means being connected between the other of said secondary windings and the system output.

9. A process for extracting the energy induced by a capacitive coupling in a guard wire (F) of an AC transmission line, of the type comprising the steps of:

— isolating a section of predetermined length of said wire (F);
— transforming said energy induced in the guard wire into an output AC voltage by means of a voltage step-down transformer (T, $T_1$); and
— regulating said output AC voltage by means of a switching circuit (TR, CM) operating in shunt at the secondary winding of the voltage step-down transformer; characterized in that
— the output AC voltage is regulated by detecting the polarity of the switching circuit, by detecting the phase and amplitude of the output AC voltage and by selectively controlling the firing of the switching circuit (TR, CM) in one polarity and subsequently in the other one according to the phase and amplitude of said output AC voltage,
— the symmetry of the positive and negative cycles of said output AC voltage is ensured; and
— firing of the switching circuit (TR, CM) is adjusted at a maximum angle when the output AC voltage exceeds a predetermined nominal value of power supply capacity by said guard wire (F).

0 005 107

FIG. 1

1

0 005 107

FIG. 2a

FIG. 2b

$E_1$

FIG. 2c

$E_2$

FIG. 2d

IS

FIG. 2e

$E_1$

2

FIG. 3

FIG. 4

FIG. 5

0 005 107